# EUROPEAN PATENT SPECIFICATION

(11) **EP 3 878 760 B1**
(45) Date of publication and mention of the grant of the patent: **27.07.2022**
(21) Application number: 20886167.4
(22) Date of filing: 04.03.2020
(51) Int. Cl.: B65B 35/40, B65B 43/42, B65B 5/06, B65B 43/28, B65B 43/44, B65B 61/20, B65B 65/02, B65B 59/00, B65B 43/46, B65G 47/84

(54) **HIGH-SPEED BLISTER-PACK BOXING MACHINE**
HOCHGESCHWINDIGKEITSVERPACKUNGSMASCHINE FÜR BLISTERVERPACKUNGEN
MACHINE DE MISE EN BOÎTE DE PLAQUETTE ALVÉOLAIRE À GRANDE VITESSE

(30) Priority: 18.01.2020 CN 202010058998
(43) Date of publication of application: 15.09.2021
(73) Proprietor: ZHEJIANG HOPING MACHINERY CO., LTD., Technology Industrial Zone Wenzhou Zhejiang 325200 (CN)
(72) Inventor: LI, Wenlei, Wenzhou, Zhejiang 325200 (CN); YANG, Yifu, Wenzhou, Zhejiang 325200 (CN); CHEN, Ke, Wenzhou, Zhejiang 325200 (CN)
(74) Representative: Petculescu, Ana-Maria
(86) International application number: PCT/CN2020/077728
(87) International publication number: WO 2021/142897

(56) References cited:
- EP-A1- 0 465 437
- EP-A1- 2 974 970
- WO-A1-2015/193758
- WO-A1-2019/026040
- WO-A1-2021/142897
- CN-A- 102 849 234
- CN-A- 103 466 272
- CN-A- 108 974 502
- CN-A- 111 114 893
- CN-B- 102 849 234
- CN-U- 203 921 286
- CN-U- 204 895 954
- CN-U- 205 098 540
- US-A- 4 254 604
- US-A- 5 454 206
- US-A1- 2008 209 867
- US-A1- 2017 137 158
- US-A1- 2019 322 066

## Description

### TECHNICAL FIELD

The present invention relates to the field of medicine packaging machinery, and more particularly, to a blister boxing machine.

### BACKGROUND

The blister boxing machine is a kind of device that loads blister plates (such as capsule medicine plates) and paper instructions into medicine boxes. It includes a material grid conveying apparatus, a folded box material warehouse, a box suction and transfer apparatus, a box conveying apparatus and a material pushing apparatus. Specifically, the material pushing apparatus is configured to push the blister plates on the material grid conveying apparatus into the boxes on the box conveying apparatus together. For example, in 2015, the applicant applied for an invention patent named as *MEDICINE PLATE PUSHING ROD MECHANISM OF BLISTER BOXING MACHINE* (publication patent number CN205098540).

A material pushing apparatus of a blister boxing machine generally includes a chain, a chain wheel, an annular push plate guide rail and a plurality of material pushing units. The material pushing unit includes a material pushing base, a push plate assembly and a push paper assembly. The material pushing unit is connected on the chain through the material pushing base. The chain wheel is driven by a main power source to drive the chain to rotate. The material pushing unit is driven by the chain wheel to move along an annular track. The push plate assembly pushes a medicine plate into a medicine box under the guidance of the annular push plate guide rail, and the push paper assembly pushes a paper instruction into the medicine box under a guidance of an annular push paper guide rail.

CN102849234B discloses a high-speed automatic medicine packing machine, comprising a machine frame, wherein the machine frame is provided with a medicine board conveying belt and a packaging box conveying belt; the medicine board conveying belt and the packaging box conveying belt are arranged in parallel, and parts of the medicine board conveying belt and the packaging box conveying belt are overlapped; the overlapped part of the medicine board conveying belt and the packaging box conveying belt is provided with a medicine board pushing device which is used for pushing the semi-finished products to the packaging box conveying belt from the medicine board conveying belt; a medicine adding device and a paper adding device are sequentially arranged from one end of the medicine board conveying belt, which is far away from the packaging box conveying belt to one end of the medicine board conveying belt, which is close to the packaging box conveying belt; and a box unfolding device and a sealing device are sequentially arranged from one end of the packaging box conveying belt, which is close to the medicine board conveying belt to one end of the packaging box conveying belt, which is far away from the medicine board conveying belt. EP0465437A1 discloses an apparatus designed to work in conjunction with and between a first packaging line, for packaging various products in blister packs, and a second carton ready-making line, for setting cartons to receive a stack of blister packs; this apparatus must comply with the following provisions: transferring of a blister pack from a cutting station to seats provided on a conveyor, must be performed in such a way that the blister packs placed in the seats have the blisters turned downwards and are perfectly centered in respect of the conveyor, all this performed without the gripping means leave the blister packs during the transfer from the cutting station to the conveyor seats; feeding of non-defective blister packs to the empty seats, previously bearing defective blister packs, must be automatically performed after that the defective blister packs have been ejected; the non-defective blister packs are withdrawn from a magazine which feeds itself, when needed, with non-defective blister packs taken from the same conveyor seats; forming a stack of non-defective blister packs and inserting the stack, together with an instruction leaflet, into a carton coming from the carton ready-making line, must be performed at high operating speed, no matter of the size of the stack and of the kind of leaflet.

However, with respect to the material pushing apparatus of the prior blister boxing machine, the chain not only bears the weight of the whole material pushing unit, but also is configured to pull the whole material pushing unit to move. As a result, the whole system is noisy and the service life of the chain is short.

### SUMMARY

In view of the shortcomings of the prior art, the present invention provides a new high-speed blister boxing machine, which can prolong the service life of the chain and reduce the noise of the system.

A high-speed blister boxing machine includes a material grid conveying apparatus, a folded box material warehouse, a box suction and transfer apparatus, a box conveying apparatus, and a material pushing apparatus. The material grid conveying apparatus and the box conveying apparatus are arranged side by side. The material pushing apparatus is located on a side of the material grid conveying apparatus. The box suction and transfer apparatus and the folded box material warehouse are both located above the box conveying apparatus. The material pushing apparatus includes a chain, a chain wheel, an annular push plate guide rail, and a plurality of material pushing units. The material pushing unit includes a material pushing base, a push plate assembly, and a push paper assembly. The material pushing base is connected to the chain, and the chain is wound on the chain wheel. An annular guide rail is arranged at each of both sides of the annular push plate guide rail. A movable sliding base is arranged at each of both ends of the material pushing base, and the movable sliding base is arranged on the annular guide rail with a sliding fit.

The annular guide rail is in a shape of bar. The movable sliding base includes an upper roller and a lower roller, and the lower roller and the upper roller are engaged with an inner side and an outer side of the annular guide rail, respectively. The movable sliding base at one end of the material pushing base further includes a left roller and a right roller, and the left roller and the right roller are engaged with a left side and a right side of the annular guide rail.

Two annular guide rails are arranged side by side at left and right, surfaces of turning transition sections of the two annular guide rails have a height difference. There are two upper rollers, and the two upper rollers are arranged back and forth. The two upper rollers, on left and right sides, correspondingly act on the two annular guide rails, respectively.

The material pushing base is connected to the chain through an adaptive member; one end of the adaptive member is hinged with a shaft pin of the chain, and the other end of the adaptive member is hinged with the material pushing base.

The push plate assembly includes a push plate head, a push plate roller and a push plate slide block. The push plate roller is located in the annular push plate guide rail. A positioning guide rail is arranged on the material pushing base, and the push plate slide block is slidably arranged on the positioning guide rail.

A guide groove frame is arranged on a periphery of the annular push plate guide rail, and an annular push paper guide groove and an annular lifting guide groove are arranged on the guide groove frame. The guide groove frame is formed by splicing an upper guide groove frame and a lower guide groove frame, and the upper guide groove frame is lifted and adjustably mounted on the lower guide groove frame. An annular push paper guide groove upper segment and an annular lifting guide groove upper segment are arranged on the upper guide groove frame, and an annular push paper guide groove lower segment and an annular lifting guide groove lower segment are arranged on the lower guide groove frame. The annular push paper guide groove upper segment and the annular push paper guide groove lower segment are engaged by extending, and the annular lifting guide groove upper segment and the annular lifting guide groove lower segment are engaged by extending. A lifting guide rail is mounted on the material pushing base, and a positioning slide block is slidably arranged on the lifting guide rail. A lifting roller and a positioning guide groove are mounted on the positioning slide block, and the lifting roller is arranged in the annular lifting guide groove. The push paper assembly includes a push paper guide rod, a push paper plate and a push paper roller, wherein the push paper plate and the push paper roller are connected on the push paper guide rod. The push paper guide rod is arranged in the positioning guide groove, and the push paper roller is arranged in the annular push paper guide groove.

An end portion of the annular push paper guide groove upper segment is provided with a vertical guide groove extending portion, an end portion of the annular push paper guide groove lower segment is provided with a vertical engaging adjustment groove, and the guide groove extending portion is lifted and arranged in the engaging adjustment groove. An end portion of the annular lifting guide groove upper segment is provided with a vertical upper guide groove side wall, an end portion of the annular lifting guide groove lower segment is provided with a vertical lower guide groove side wall, and the lower guide groove side wall is, from left to right, fully engaged with the upper guide groove side wall.

The box suction and transfer apparatus includes a mounting base, a power source, a main shaft, a revolution table, a center-fixed gear, and a plurality of suction nozzle rod assemblies. The suction nozzle rod assembly includes a suction nozzle and a suction rod, and the suction rod of each suction nozzle rod assembly is eccentrically mounted on one rotary table. The rotary table is rotatably mounted on the revolution table through a rotary shaft, and a planetary gear is mounted on the rotary shaft. A transition gear is rotatably mounted on the revolution table. The planetary gear is engaged with the transition gear, and the transition gear is engaged with the center-fixed gear.

The box conveying apparatus includes a machine base, supporting members, a left main chain, a right main chain, and a driving spline shaft. The left main chain is wound on a left main chain wheel, and the right main chain is wound on a right main chain wheel. The right main chain wheel is arranged on the driving spline shaft through a right spline sleeve, and a right rotating sleeve is rotatably sleeved outside the right spline sleeve. The right rotating sleeve is connected to a right driving pulley and a right auxiliary chain wheel, and the right auxiliary chain wheel is located between the right main chain wheel and the right driving pulley. A right auxiliary chain is wound on the right auxiliary chain wheel, and the right auxiliary chain is connected to a supporting member. The left main chain wheel is connected on the driving spline shaft through a left round sleeve, and a left rotating sleeve is rotatably sleeved on the left round sleeve. The left rotating sleeve is connected to a left driving pulley and a left auxiliary chain wheel, and the left auxiliary chain wheel is located between the left main chain wheel and the left driving pulley. A left auxiliary chain is wound on the left auxiliary chain wheel, and the left auxiliary chain is connected to a supporting member. A driven spline shaft is mounted on a side of the driving spline shaft. A right driven pulley with a spline hole is sleeved on a right end of the driven spline shaft, and a right conveying belt is wound on the right driven pulley and the right driving pulley. A left end of the driven spline shaft is connected to a left driven pulley and an outer driven pulley, and a left conveying belt is wound on the left driven pulley and the left driving pulley. A slide base is mounted on the machine base and is adjusted to move up and down. An upper traveling wheel and a lower traveling wheel are mounted on the slide base. The driving spline shaft is connected to an outer driving pulley, and an outer conveying belt is wound outside the outer driving pulley, the outer driven pulley, the upper traveling wheel and the lower traveling wheel.

Auxiliary wheels are arranged between the upper traveling wheel and the outer driving pulley, between the upper traveling wheel and the outer driven pulley, between the lower traveling wheel and the outer driving pulley, and between the lower traveling wheel and the outer driven pulley, respectively. The outside of each of the four auxiliary wheels is pressed on the outer conveying belt.

According to the high-speed blister boxing machine provided by the present invention, annular guide rails are arranged on both sides of the annular push plate guide rail, so that the movable sliding bases at both ends of the material pushing base are arranged on the annular guide rails with a sliding fit. Therefore, the annular guide rail bears the weight of the whole material pushing unit, while the chain is configured to only pull the whole material pushing unit to move, thereby greatly reducing the noise of the whole system and prolonging the service life of the chain.

### BRIEF DESCRIPTION OF THE DRAWINGS

FIG. 1 is a perspective view of a whole machine of the present invention;
FIG. 2 is a perspective view of a material pushing apparatus;
FIG. 3 is a front view of the whole machine of the material pushing apparatus;
FIG. 4 is a first internal structure view of the material pushing apparatus (guide groove frame is hidden);
FIG. 5 is a second internal structure view of the material pushing apparatus (groove guide frame, push plate assembly and push paper assembly are hidden);
FIG. 6 is a third internal structure view of the material pushing apparatus (groove guide frame, push plate assembly and push paper assembly are hidden);
FIG. 7 is a connection view of a chain and an adaptive member;

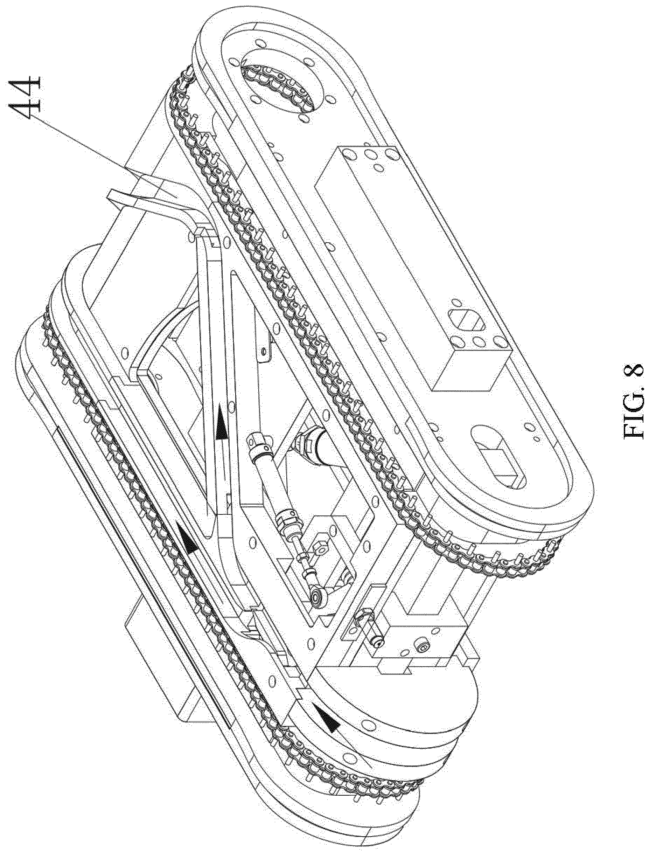

FIG. 8 is a fifth internal structure view of the material pushing apparatus (guide groove frame and material pushing unit are hidden);
FIG. 9 is a partial structural diagram of an annular guide rail of the material pushing apparatus;
FIG. 10 is a structural diagram of a material pushing base and the push plate assembly;
FIG. 11 is a structural diagram of the push paper assembly and a positioning guide groove;
FIG. 12 is an exploded view of a guide groove frame;
FIG. 13 is an engagement structure view of an annular lifting guide groove upper segment and an annular lifting guide groove lower segment;
FIG. 14 is a view of a state of use of a box suction and transfer apparatus;
FIG. 15 is a structural diagram of the box suction and transfer apparatus;
FIG. 16 is a view of a suction process of a suction nozzle and a box;
FIG. 17 is a partial view of a box conveying apparatus;
FIG. 18 is a view of an internal conveying structure;
FIG. 19 is a side view of FIG. 18; and

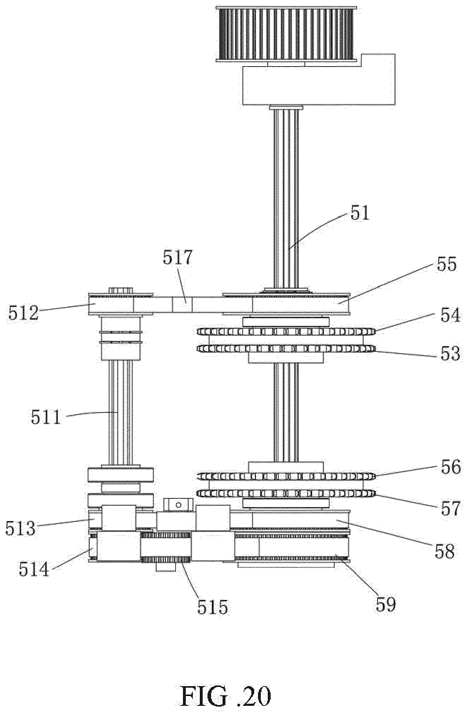

FIG. 20 is a top view of FIG. 18.

### DETAILED DESCRIPTION OF THE EMBODIMENTS

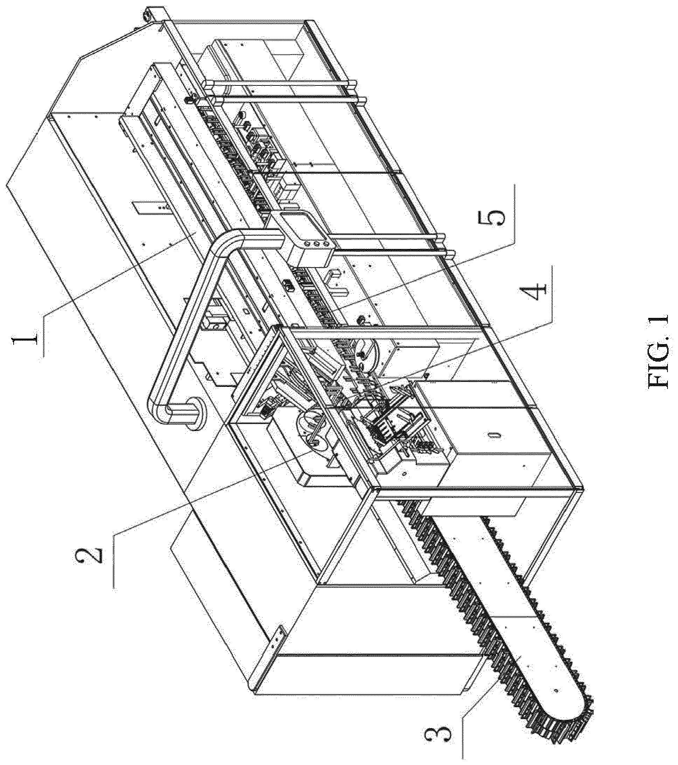

As shown in FIG. 1, a high-speed blister boxing machine includes the material grid conveying apparatus 3, the folded box material warehouse 1, the box suction and transfer apparatus 2, the box conveying apparatus 5 and the material pushing apparatus 4. The material grid conveying apparatus 3 and the box conveying apparatus 5 are arranged side by side. The material pushing apparatus 4 is located on a side of the material grid conveying apparatus 3. The box suction and transfer apparatus 2 and the folded box material warehouse 1 are both located above the box conveying apparatus 5. The folded box material warehouse 1 is configured to place a row of folded boxes (flat boxes) stacked vertically. The box suction and transfer apparatus 2 is configured to suck a box down from the folded box material warehouse 1, open it and transfer it to the box conveying apparatus 5. The box conveying apparatus 5 is configured to convey the opened box. The material grid conveying apparatus 3 is configured to convey a blister plate. The material pushing apparatus is configured to push the blister plate on the material grid conveying apparatus 3 together into the box on the box conveying apparatus 5.

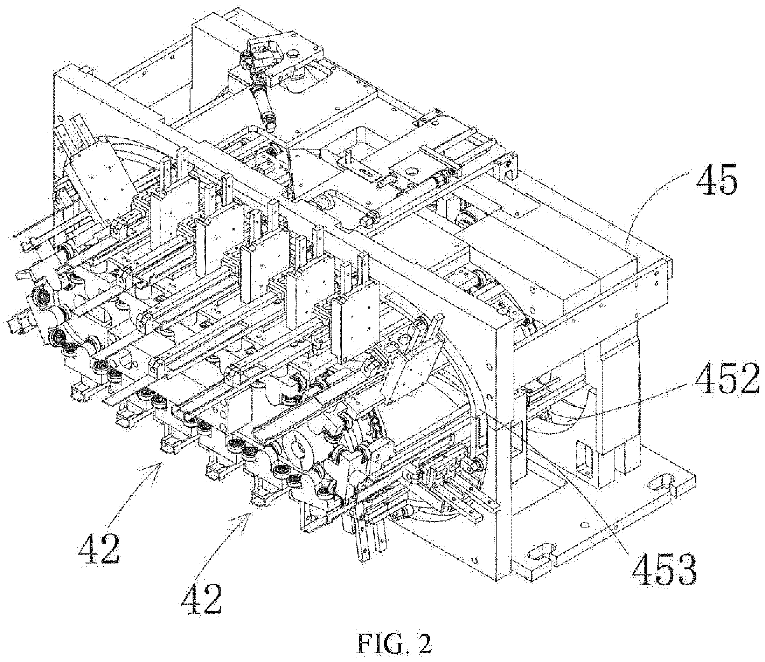

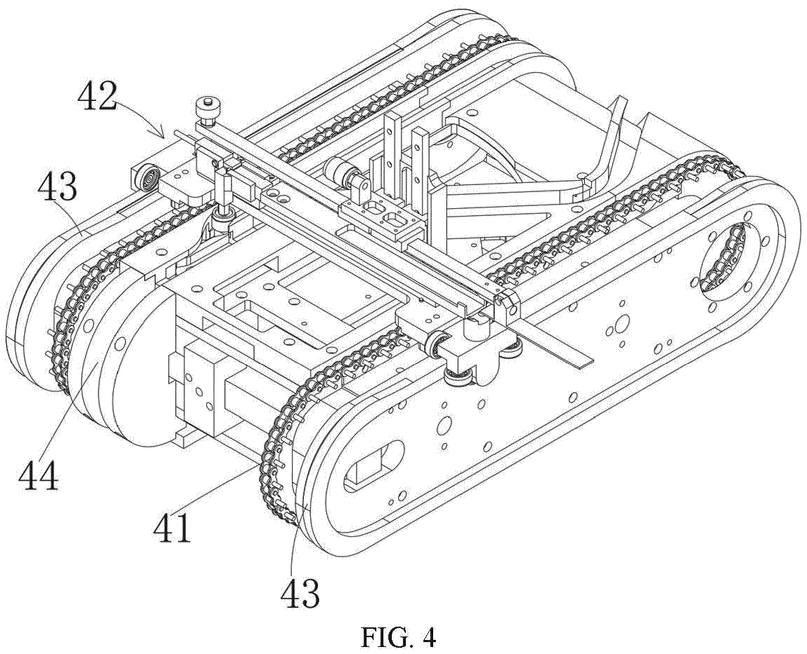

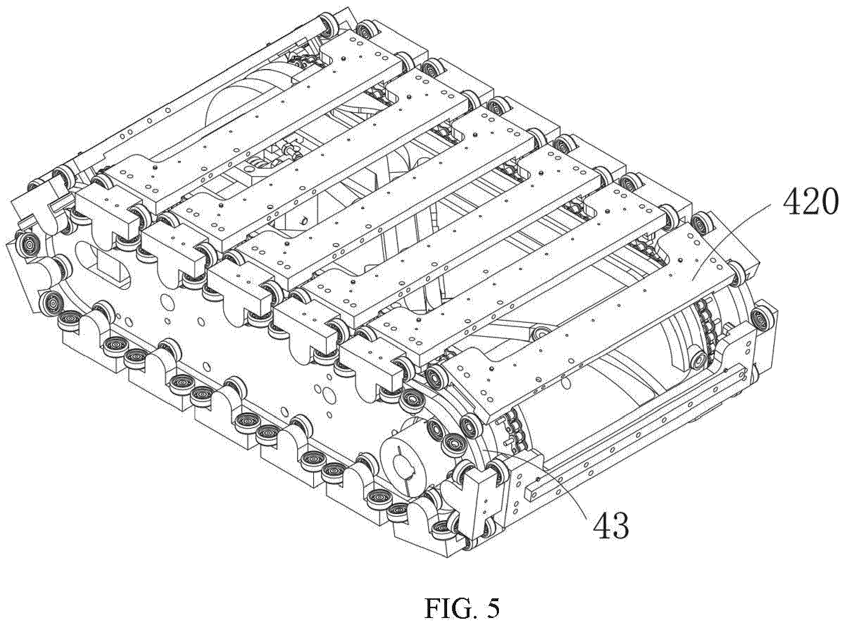

As shown in FIGS. 2-6, the material pushing apparatus includes the chain 41, the chain wheel (not shown), the annular push plate guide rail 44, the annular push paper guide rail and a plurality of material pushing units 42. Each material pushing unit 42 includes the material pushing base 420, the push plate assembly 421, and the push paper assembly 422. The push plate assembly 421 and the push paper assembly 422 are both mounted on the material pushing base 420. The material pushing base 420 is connected to the chain 41, and the chain 41 is wound on the chain wheel. The chain wheel is driven by a main power source to drive the chain 41 to rotate, and the chain 41 drives the material pushing unit 42 to perform an annular motion. In order to reduce the bearing load of the chain 41, in the present invention, the annular guide rail 43 is arranged on each of both sides of the annular push plate guide rail 44, and the movable sliding base 423 is arranged at each of both ends of the material pushing base 420. The movable sliding base 423 is arranged on the annular guide rail 43 with a sliding fit, where "sliding fit" means that the movable sliding base 423 is capable of performing the annular motion on the annular guide rail 43. By means of such structure, the weight of the whole material pushing unit 42 acts on the annular guide rail 43, in other words, the annular guide rail 43 bears the weight of the whole material pushing unit 42, while the chain 41 only needs to pull the whole material pushing unit 42 to perform the annular motion, so that the noise of the whole system is significantly reduced, and the service life of the chain 41 is greatly prolonged.

There are two forms of the annular guide rail 43, and correspondingly, there are two structures of the movable sliding base 423, and two embodiments are given in detail below.

First embodiment: the annular guide rail 43 can be in a form of groove. In this case, the movable sliding base 423 may be one roller, so that one roller rolls in an annular groove. The groove is preferably located on a side, so that the roller enters the groove from the side. This structure also enables the movable sliding base 423 to be arranged on the annular guide rail 43 with a sliding fit, which achieves the same technical effect.

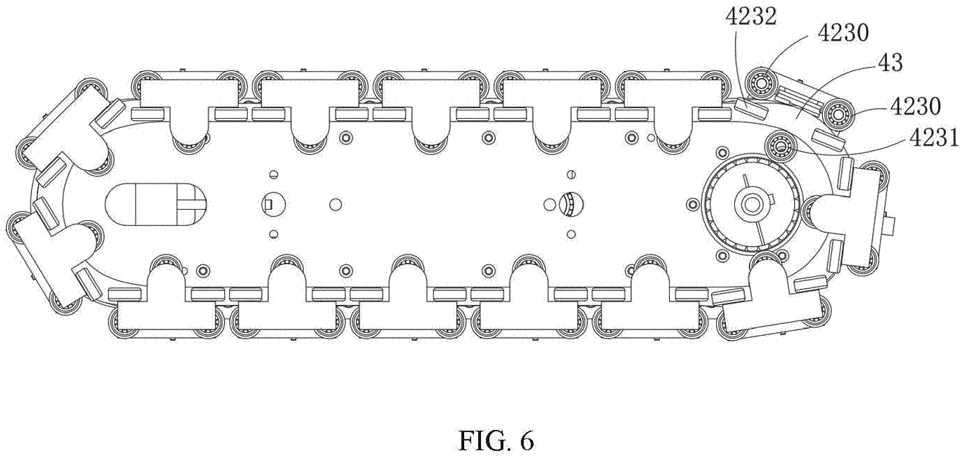

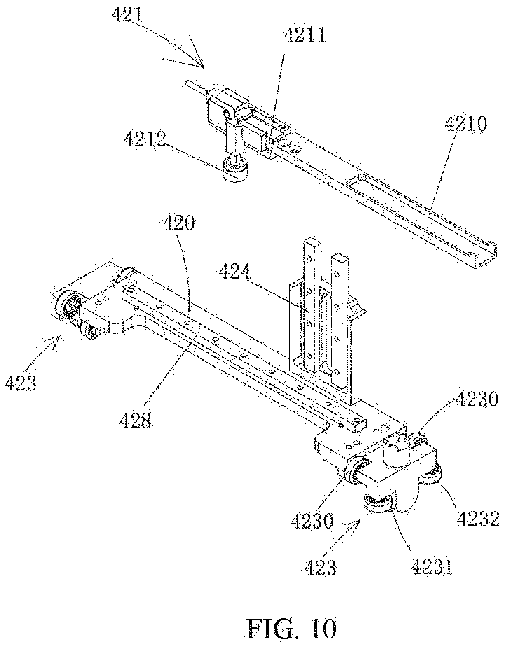

Second embodiment: the annular guide rail 43 is in a shape of bar. In this case, the movable sliding base 423 includes the upper roller 4230 and the lower roller 4231. As shown in FIGS. 6 and 10, the lower roller 4231 and the upper roller 4230 are engaged with the inner side and the outer side of the annular guide rail 43, respectively, that is, the lower roller 4231 acts on an inner ring of the annular guide rail 43, while the upper roller 4230 acts on an outer ring of the annular guide rail 43, so that the movable sliding base 423 does not move to towards the inside and outside. The movable sliding base 423 at one end further includes the left roller and the right roller 4232. The left roller and the right roller 4232 are engaged with the left side and the right side of the annular guide rail 43, that is, the left roller acts on the left side of the annular guide rail 43, while the right roller 4232 acts on the right side of the annular guide rail 43, so that the movable sliding base 423 does not move towards the left and right. This structure also enables the movable sliding base 423 to be arranged on the annular guide rail 43 with a sliding fit, which achieves the same technical effect.

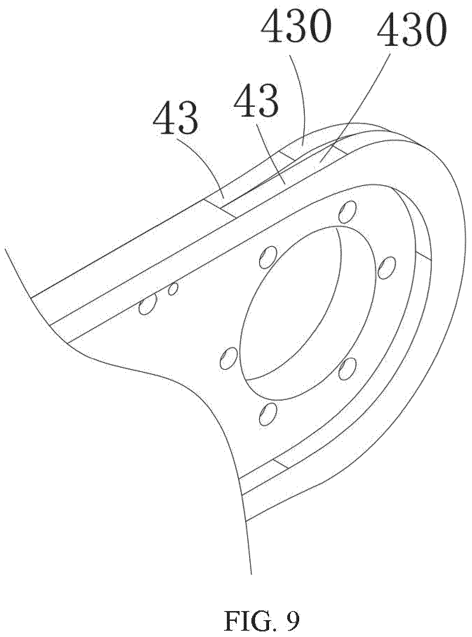

On the basis of the second form of the annular guide rail 43, in order to improve the stability of the engagement of the movable sliding base 423 and the annular guide rail 43, as shown in FIG. 9, the annular guide rail 43 of the present invention includes two annular guide rails 43 arranged side by side. As shown in FIG. 10, the movable sliding base 423 includes two upper rollers 4230 arranged back and forth. As shown in FIG. 6, the two upper rollers 4230, on left and right sides, correspondingly act on the two annular guide rails 43, and the two upper rollers 4230 and one lower roller 4231 form a triangle when viewed from the side. This structure of the movable sliding base 423 has the following advantages: I. the arrangement of two upper rollers 4230 can increase a contact area of the movable sliding base 423 and the annular guide rail 43, so that the force borne by each upper roller 4230 can be shared, thereby reducing a friction force between each upper roller 4230 and the annular guide rail 43, and finally reducing the noise of the system and prolonging the service life of the movable sliding base 423; and II. the two upper rollers 4230 arranged back and forth enable the movable sliding base 423 to be engaged with the annular guide rails 43 in a triangular form, and the three points form a plane, so that the movable sliding base 423 can turn more smoothly in an arc section of the annular guide rails 43. Based on the above structure, according to the principle of conjugate cam, in order to enable the movable sliding base 423 to turn smoothly (i.e., the two upper rollers 4230 and the one lower roller 4231 are always attached to the annular guide rails 43 in the turning section), surfaces of the turning transition sections 430 of the two annular guide rails 43 have a height difference. By means of this structure, the movable sliding base 423 is always engaged with the annular guide rails 43 in the turning section, so that a movement track of the central point of the movable sliding base 423 in the turning section infinitely approaches a semicircle, thus a movement track of the material pushing unit 42 infinitely approaches a runway shape to finally ensure the stable operation of the material pushing unit 42.

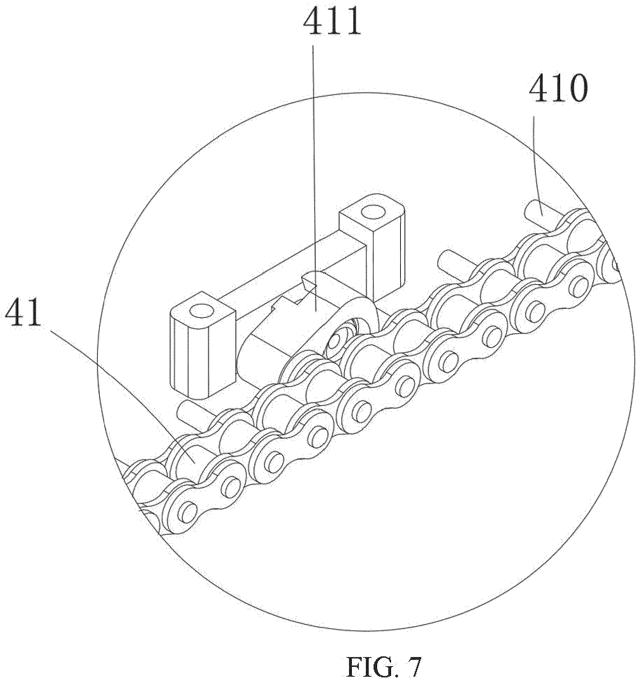

As mentioned above, the chain 41 pulls the material pushing unit 42 to move. However, the chain 41 will be gradually stretched as time accumulates, and with the stretching of the chain 41, the chain 41 will not normally push the material pushing unit 42 to operate. In order to solve this problem, as shown in FIG. 7, the material pushing base 420 is connected to the chain 41 through the adaptive member 411. One end of the adaptive member 411 is hinged with the shaft pin 410 of the chain 41, and the other end of the adaptive member 411 is hinged with the material pushing base 420 (including direct hinging or indirect hinging, as shown in FIG. 7, the other end of the adaptive member 411 is hinged with a connecting base, and the connecting base is connected to the material pushing base 420). The advantage of this structure is as follows: even if the chain 41 is stretched to a certain extent, since the material pushing base 420 is limited to the annular guide rail 43, the adaptive member 411 can be pulled by the material pushing base 420, and the adaptive member 411 in turn pulls the chain 41. This ensures that the chain 41 can normally push the material pushing unit 42 to operate, and finally ensures that the push plate roller 4212 will not be separated from the annular push plate guide rail 44 when turning.

At present, when the material pushing apparatus of the mainstream blister boxing machine on the market changes specifications (the heights of blister plates with different specifications will be different), the height of the push paper plate used for pushing the paper instructions also changes accordingly, but the prior structure can only support adjusting or replacing a single push paper assembly 422 one by one, which is time-consuming and laborious, and the adjusted heights are difficult to be unified, thereby affecting the pushing of the material into the box.

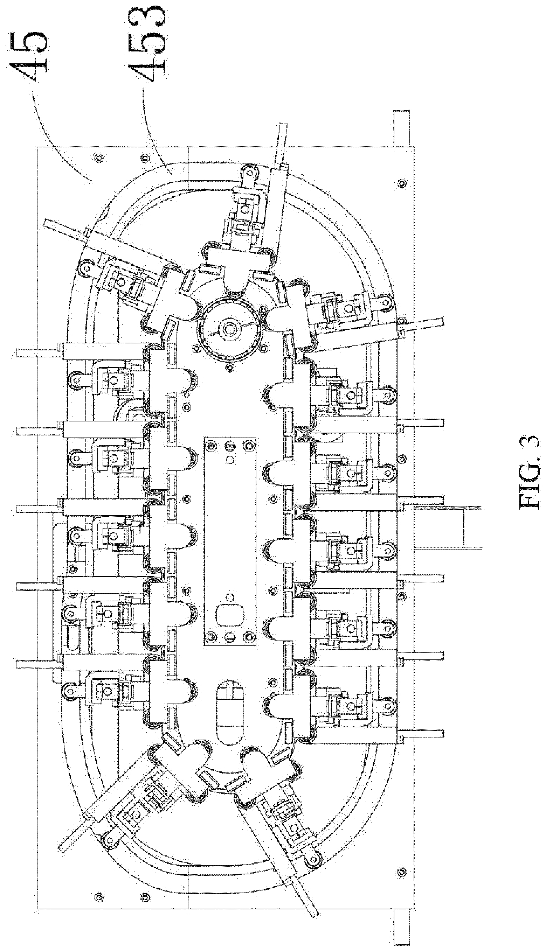

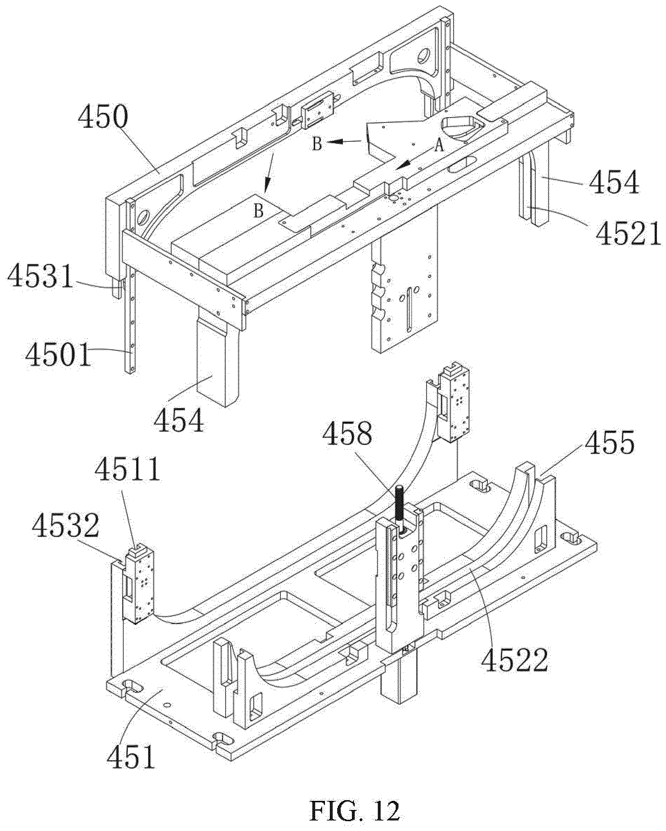

In order to solve this problem, according to the present invention, the guide groove frame 45 is arranged on a periphery of the annular push plate guide rail 44. As shown in FIG. 2 and FIG. 3, the annular push paper guide groove 452 and the annular lifting guide groove 453 are arranged on the guide groove frame 45. As shown in FIG. 12, the guide groove frame 45 is formed by splicing the upper guide groove frame 450 and the lower guide groove frame 451, and the upper guide groove frame 450 is lifted and adjustably mounted on the lower guide groove frame 451. The annular push paper guide groove upper segment 4521 and the annular lifting guide groove upper segment 4531 are arranged on the upper guide groove frame 450, while the annular push paper guide groove lower segment 4522 and the annular lifting guide groove lower segment 4532 are arranged on the lower guide groove frame 451. The annular push paper guide groove upper segment 4521 and the annular push paper guide groove lower segment 4522 can be engaged by extending, and the annular lifting guide groove upper segment 4531 and the annular lifting guide groove lower segment 4532 can be engaged by extending. In other words, when the upper guide groove frame 450 is lifted and adjusted, a distance between the annular push paper guide groove upper segment 4521 and the annular push paper guide groove lower segment 4522 changes, but the two still form a closed loop, and the same principle is for the annular lifting guide groove upper segment 4531 and the annular lifting guide groove lower segment 4532.

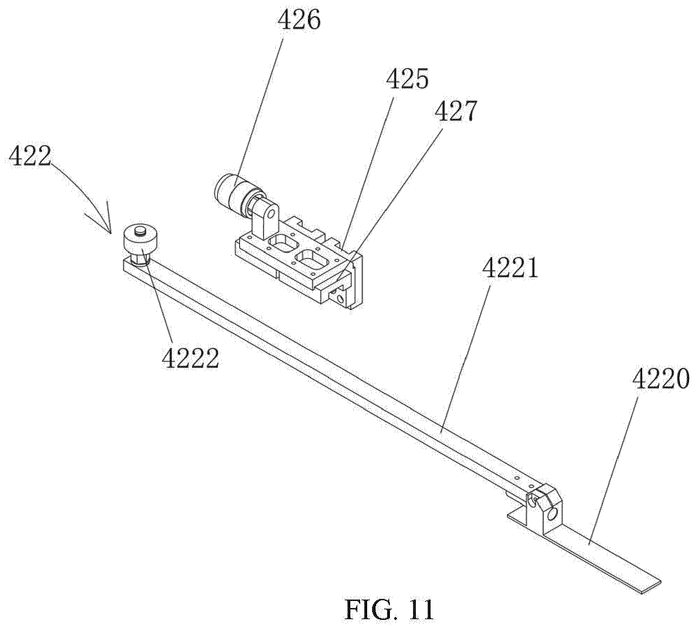

As the above structure of the guide groove frame 45 is adopted, in order to enable the push paper assembly 422 to be adapted to such a guide groove frame 45, the structure of the material pushing unit 42 is improved accordingly, and the specific improvement is as follows. As shown in FIG. 10, the lifting guide rail 424 is mounted on the material pushing base 420. As shown in FIG. 11, the positioning slide block 425 is slidably arranged on the lifting guide rail 424, and the lifting roller 426 and the positioning guide groove 427 are arranged on the positioning slide block 425. The lifting roller 426 is arranged in the annular lifting guide groove 453. The push paper assembly 422 includes the push paper plate 4220 and the push paper guide rod 4221. One end of the push paper guide rod 4221 is connected to the push paper plate 4220, and the other end of the push paper guide rod 4221 is connected to the push paper roller 4222. The push paper guide rod 4221 is arranged in the positioning guide groove 427, and the positioning guide groove 427 is configured to guide the push paper guide rod 4221. The push paper roller 4222 is arranged in the annular push paper guide groove 452.

The principle of adjusting the height of the push paper plate 4220 is as follows. When the height of the medicine plate increases, the height of the push paper plate 4220 increases correspondingly. During adjustment, the upper guide groove frame 450 rises, and at this time, the annular push paper guide groove upper segment 4521 and the annular lifting guide groove upper segment 4531 rise simultaneously. Since the lifting roller 426 is in the annular lifting guide groove 453, the positioning slide block 425 moves and rises on the lifting guide rail 424, and the positioning guide groove 427 also rises simultaneously. Since the push paper roller 4222 is arranged in the annular push paper guide groove 452, the push paper guide rod 4221 and the push paper plate 4220 also rise simultaneously. In this way, the push paper guide rod 4221 is still in the positioning guide groove 427, and the height of the push paper plate 4220 can adapt to the height of the medicine plate after being increased through adjusting. Therefore, it is very simple to adjust the height of the push paper plate 4220, as long as the height of the upper guide groove frame 450 is adjusted, thereby reducing the difficulty of adjusting the equipment after changing the specifications of the medicine plates, and improving the production efficiency.

The extending engagement between the annular push paper guide groove upper segment 4521 and the annular push paper guide groove lower segment 4522 can adopt a variety of structures, for example, a stretchable extension guide groove can be adopted, and the upper and lower segments are engaged through the extension groove. The present invention provides a more convenient engagement manner: as shown in FIG. 12, an end portion of the annular push paper guide groove upper segment 4521 is provided with the vertical guide groove extending portion 454, while an end portion of the annular push paper guide groove lower segment 4522 is provided with the vertical engaging adjustment groove 455, and the guide groove extending portion 454 is lifted and arranged in the engaging adjustment groove 455. When the height of the upper guide groove frame 450 is adjusted, the guide groove extending portion 454 on the upper guide groove frame 450 moves vertically up and down in the engaging adjustment groove 455 on the lower guide groove frame 451, while the annular push paper guide groove 452 is still a closed guide groove.

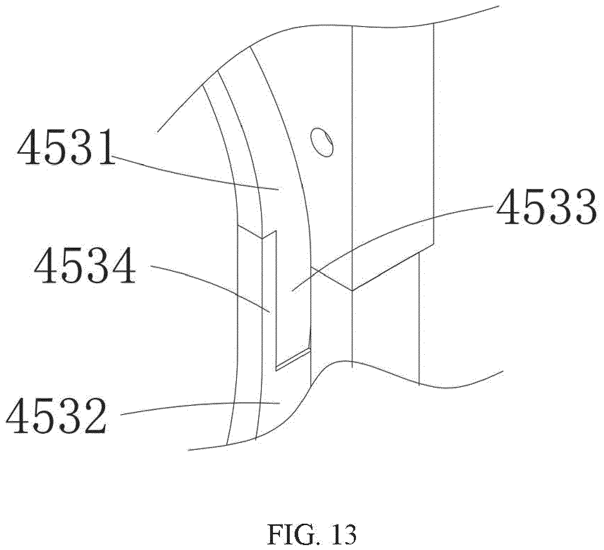

Similarly, the extending engagement of the annular lifting guide groove upper segment 4531 and the annular lifting guide groove lower segment 4532 can adopt a variety of structures. Since the annular lifting guide groove 453 is slotted along the transverse direction, an extension block can be adopted at a side edge to move up and down, and the upper and lower segments are engaged through the extension block. The present invention provides a more convenient engagement manner: as shown in FIG. 12 and FIG. 13, an end portion of the annular lifting guide groove upper segment 4531 is provided with the vertical upper guide groove side wall 4533, while an end portion of the annular lifting guide groove lower segment 4532 is provided with the vertical lower guide groove side wall 4534, and the lower guide groove side wall 4534 is, from left to right, fully engaged with the upper guide groove side wall 4533. When the height of the upper guide groove frame 450 is adjusted, although the distance from top to bottom varies, the upper guide groove side wall 4533 on the upper guide groove frame 450 and the lower guide groove side wall 4534 on the lower guide groove frame 451 are attached to each other left and right, and the lifting roller can still be on the upper guide groove side wall 4533 or the lower guide groove side wall 4534, that is, the annular lifting guide groove 453 is still a closed guide groove.

In order to adjust the position of the upper guide groove frame 450 more smoothly, according to the present invention, the lifting slide block base 4511 is mounted on the lower guide groove frame 451, and the linear guide rail 4501 is mounted on the upper guide groove frame 450. The lifting slide block base 4511 is slidably arranged on the linear guide rail 4501. The adjusting screw 458 is further mounted on the lower guide groove frame 451, and the adjusting screw 458 is threaded with the upper guide groove frame 450. When it is necessary to adjust the position of the upper guide groove frame 450, the upper guide groove frame 450 moves up and down through the linear guide rail 4501 by rotating the adjusting screw 458 (either manually or by a motor), thereby realizing smooth adjustment.

Certainly, the push plate assembly 421 includes the push plate head 4210, the push plate roller 4212, and the push plate slide block 4211. As shown in FIG. 10, the push plate roller 4212 and the push plate head 4210 are both connected on the push plate slide block 4211. The push plate roller 4212 is located in the annular push plate guide rail 44. The positioning guide rail 428 is arranged on the material pushing base 420, and the push plate slide block 4211 is slidably arranged on the positioning guide rail 428. With the annular motion of the material pushing base 420, the push plate roller 4212 moves on the annular push plate guide rail 44, and the push plate slide block 4211 moves on the positioning guide rail 428 under a guidance of the annular push plate guide rail 44, so that the push plate head 4210 performs an action of pushing the medicine plate.

In the material pushing apparatus 4, the annular guide rails 43 is arranged on both sides of the annular push plate guide rail 44 to enable the movable sliding bases 423 at both ends of the material pushing base 420 to be arranged on the annular guide rails 43 with a sliding fit. In this way, the annular guide rails 43 bear the weight of the whole material pushing unit 42, while the chain 41 is configured to only pull the whole material pushing unit 42 to move, thereby greatly reducing the noise of the whole system and prolonging the service life of the chain.

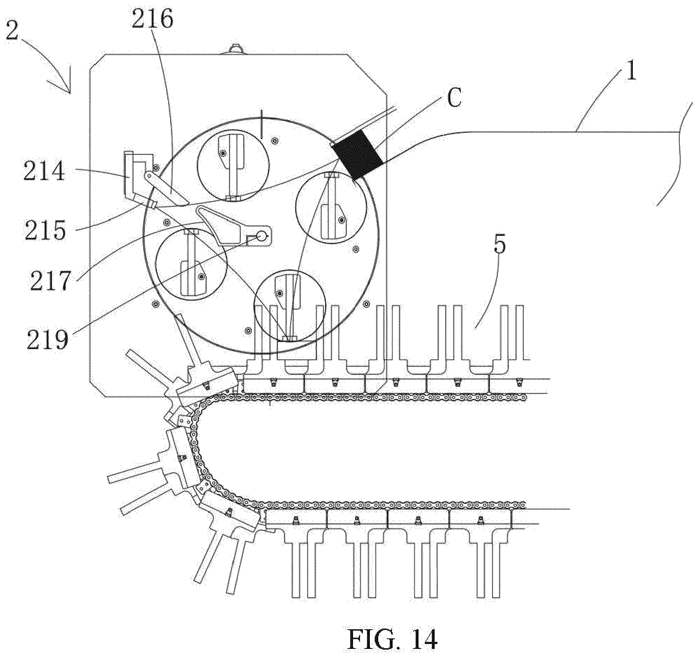

As shown in FIG. 14, the box suction and transfer apparatus 2 is installed between the folded box material warehouse 1 and the box conveying apparatus 5, and is configured to transfer the folded box C (or flat box) in the folded box material warehouse 1 to the box conveying apparatus 5 arranged below the folded box material warehouse 1. The box conveying apparatus 5 conveys the box to the next station.

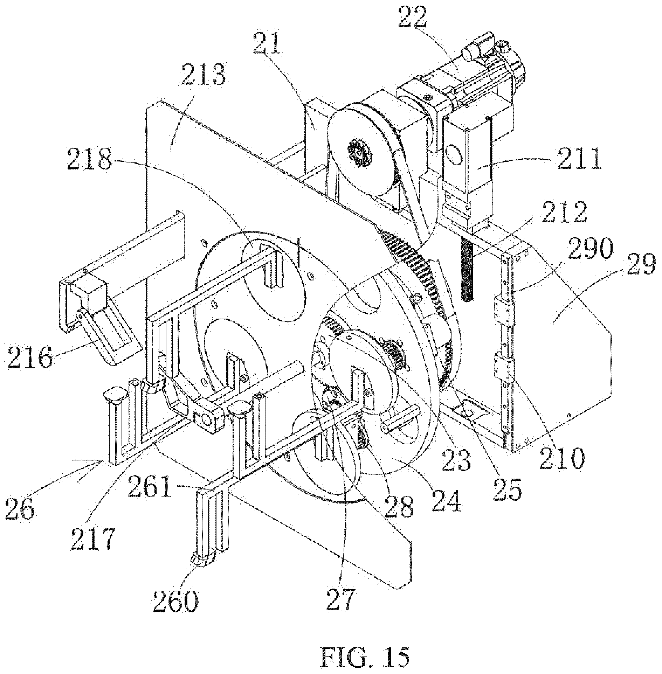

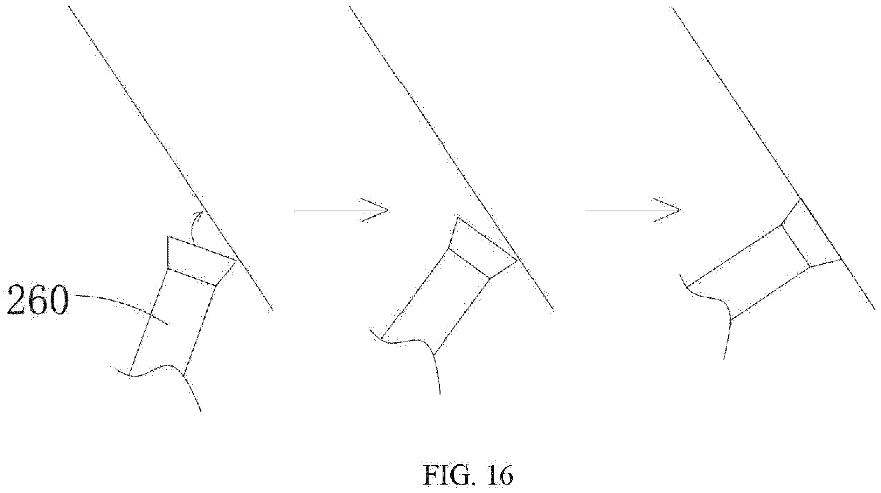

As shown in FIG. 15, the box suction and transfer apparatus includes the mounting base 21, the power source 22, the main shaft 219, the center-fixed gear 23, the revolution table 24, and a plurality of suction nozzle rod assemblies 26. The main shaft 219 is mounted on the mounting base 21, and the revolution table 24 is mounted on the main shaft 219 through a bearing. The center-fixed gear 23 is fixedly mounted on the main shaft 219. The suction nozzle rod assembly 26 includes the suction nozzle 260 and the suction rod 261. The suction rod 261 of each suction nozzle rod assembly 26 is eccentrically mounted on one rotary table 218, and the rotary table 218 is rotatably mounted on the revolution table 24 through a rotary shaft. The planetary gear 28 is mounted on the rotary shaft (the rotary shaft is not shown), and the transition gear 27 is rotatably mounted on the revolution table 24. The planetary gear 28 is engaged with the transition gear 27, and the transition gear 27 is engaged with the center-fixed gear 23. The driving wheel 25 is rotatably mounted on the main shaft 218, and the driving wheel 25 is connected to the revolution table 24. The revolution table 24 rotates when the driving wheel 25 is driven to rotate by the power source 22. The rotary table 218 is rotatably mounted on the revolution table 24 through the rotary shaft, and the suction rod 261 of each suction nozzle rod assembly 26 is mounted on one rotary table 218, so that the rotary table 218 and the suction nozzle rod assembly 26 revolve along with the revolution table 24. The planetary gear 28 is mounted on the rotary shaft, while the planetary gear 28 is engaged with the transition gear 27, and the transition gear 27 is engaged with the center-fixed gear 23, so that the suction nozzle rod assembly 26 and the rotary table 218 rotate as the rotary table 218 revolves. Since the suction rod 261 is eccentrically mount on the rotary table 218, the suction nozzle 260 forms a movement trajectory as shown in FIG. 14 during the whole movement process, and this movement trajectory enables the suction nozzle 260 to be adsorbed on the box in a way that a bevel angle gradually turns to positive (as shown in FIG. 16), thus prolonging the process of the suction nozzle 260 being adsorbed on the flat box, so as to strengthen the adsorption force. In this way, the box is less prone to fall off, and a box conveying rate of the high-speed blister boxing machine can be met.

In order to open the box in the conveying process, according to the present invention, the outer side plate 213 is arranged on the mounting base 21, and a counter-suction assembly is mounted on the outer side plate 213. As shown in FIG. 14, the counter-suction assembly includes the counter-suction nozzle 215 and the counter-suction rod 214. The first box stopper 216 is mounted at a side of the counter-suction nozzle 215, and the second box stopper 217 is arranged between the first box stopper 216 and the shaft center of the main shaft. When the folded box is sucked down and rotates at a certain angle to a position where the counter-suction assembly is located, the counter-suction nozzle 215 of the counter-suction assembly sucks the box, so that the box is slightly opened. Then, the box is successively unfolded by the first box stopper 216 and the second box stopper 217 in the process of falling. When the box arrives to the bottom, the box is completely opened to form a three-dimensional box to fall into the box conveying apparatus 5.

Finally, it is worth mentioning that, in the present invention, the surface of the second box stopper 217 facing the first box stopper 216 is a circular arc surface. Since the movement trajectory of the suction nozzle 260 has a certain radian, the circular arc surface of the second box stopper 217 can adapt to this movement trajectory of the suction nozzle 260, thereby enabling the box to be more stably and smoothly unfolded.

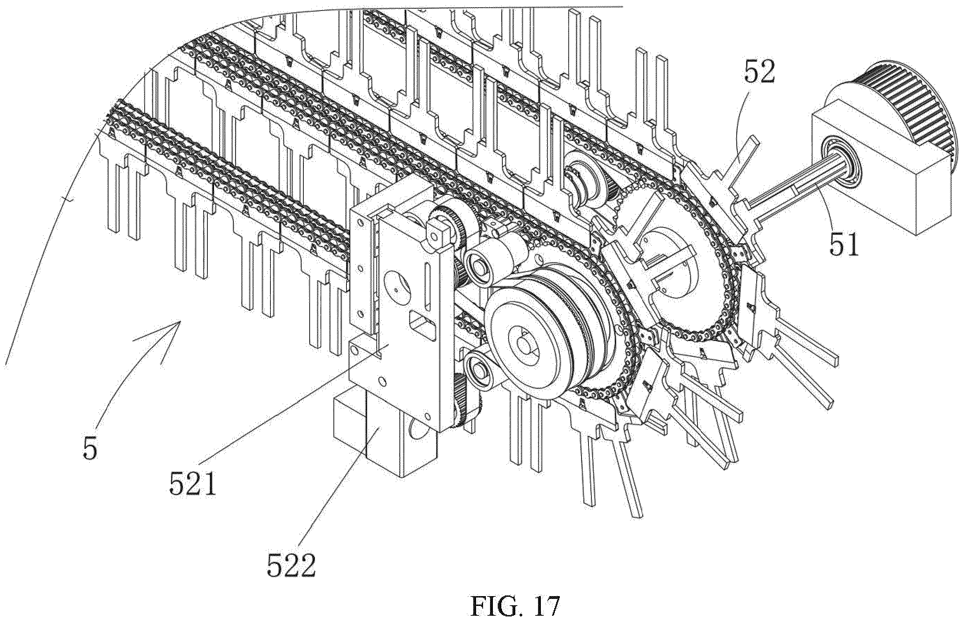

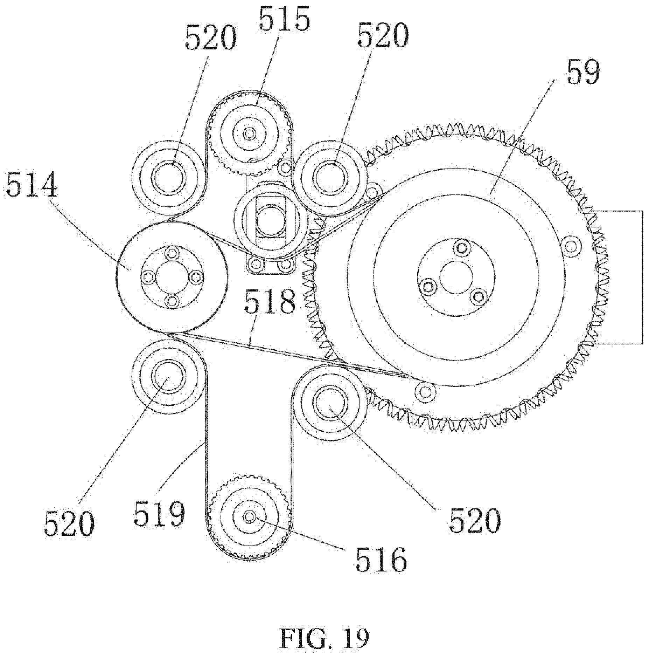

As shown in FIGS. 17 and 19, the box conveying apparatus 5 includes a machine base (not shown), the supporting member 52, a left main chain, a right main chain, and the driving spline shaft 51. The left main chain is wound around the left main chain wheel 56, and the right main chain is wound around the right main chain wheel 53. Each of the left main chain and the right main chain is connected to the supporting member 52 thereon. As shown in FIG. 17, the supporting member 52 includes a base portion and a stop bar portion, and the stop bar portion is located on the base portion. The base portion is connected on the pin shaft of the chain. It is worth mentioning here that, in the present invention, the names with "left", "right", "main" or "auxiliary" are only used for distinction and do not play a limiting role.

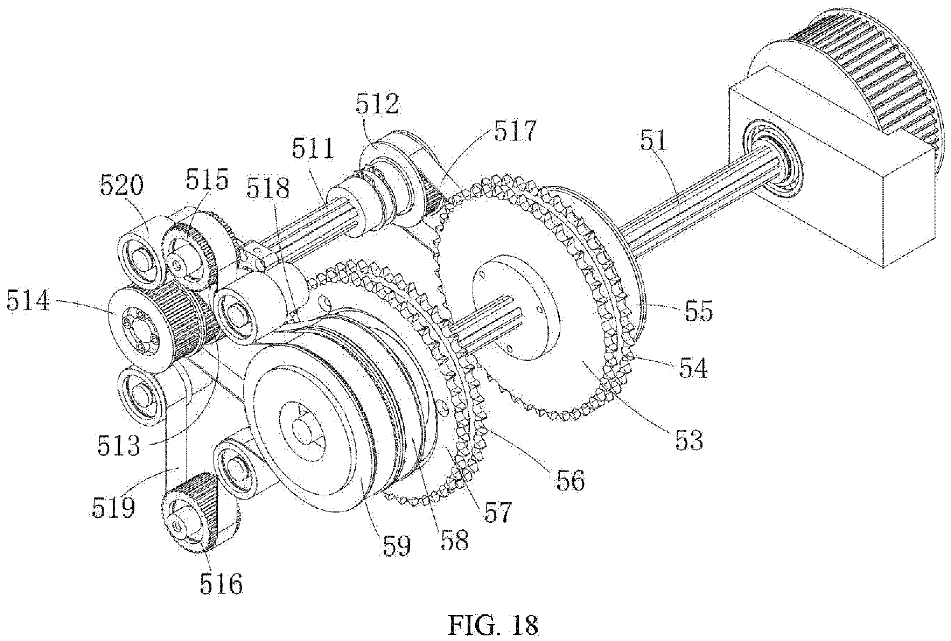

As shown in FIG. 18, the right main chain wheel 53 is arranged on the driving spline shaft 51 through a right spline sleeve, and a right rotating sleeve (not shown) is rotatably sleeved outside the right spline sleeve. The right rotating sleeve is connected to the right driving pulley 55 and the right auxiliary chain wheel 54. A right auxiliary chain is wound on the right auxiliary chain wheel 54, and the right auxiliary chain is connected to the supporting member 52. The right auxiliary chain and the right main chain are arranged side by side.

As shown in FIG. 17, as long as the right main chain wheel 53 maintains stationary and the right auxiliary chain wheel 54 rotates, the supporting member 52 on the right main chain wheel 53 is staggered from the supporting member 52 on the right auxiliary chain. In this way, as long as the right auxiliary chain is rotated, a distance to be adapted to different box widths can be adjusted. Certainly, the maximum box width is a distance between two adjacent supporting members 52 on an identical chain (minus a width of the upper end of the supporting member 52). Here is only a brief explanation of the principle of adjusting the box width on the right side, which is same as that of adjusting the box width on the left side. Through synchronous adjustment on the left and right sides, the adjustment of the distance to be adapted to different box widths is finally realized. The following first introduces a driving structure, and then explains in detail the adjustment principle suitable for different specifications of box widths and box lengths.

As shown in FIG. 18, the left main chain wheel 56 is connected on the driving spline shaft 51 through a left round sleeve (the left main chain wheel 56 does not move left and right and is thus fixed on the driving spline shaft 51), and a left rotating sleeve is rotatably sleeved on the left round sleeve. The left rotating sleeve is connected to the left driving pulley 58 and the left auxiliary chain wheel 57, and the left auxiliary chain wheel 57 is located between the left main chain wheel 56 and the left driving pulley 58. A left auxiliary chain is wound on the left auxiliary chain wheel 57, and the left auxiliary chain is connected to the supporting member 52. The left auxiliary chain and the left main chain are arranged side by side. Just like the above adjustment principle, as long as the left main chain wheel 56 maintains stationary and the left auxiliary chain wheel 57 rotates, the supporting member 52 on the left main chain wheel 56 is staggered from the supporting member 52 on the left auxiliary chain.

The adjustment of the left and right sides must be synchronized. With regard this, the driven spline shaft 511 is mounted on a side of the driving spline shaft 51. The right driven pulley 512 with a spline hole is sleeved on the right end of the driven spline shaft 511, that is, the spline hole of the right driven pulley 512 is sleeved on the driven spline shaft 511, and the right driven pulley 512 can move axially on the driven spline shaft 511. The right conveying belt 517 is wound on the right driven pulley 512 and the right driving pulley 55. The left end of the driven spline shaft 511 is connected to the left driven pulley 513 and the outer driven pulley 514, and the left conveying belt 518 is wound on the left driven pulley 513 and the left driving pulley 58. Moreover, as shown in FIGS. 17 and 19, the slide base 521 is mounted on the machine base, and is capable of being adjusted to move up and down. The upper traveling wheel 515 and the lower traveling wheel 516 are mounted on the slide base 521. The driving spline shaft 51 is connected to the outer driving pulley 59 (the outer driving pulley 59 may be connected on the left round sleeve). The outer conveying belt 519 is wound outside the outer driving pulley 59, the outer driven pulley 514, the upper traveling wheel 515 and the lower traveling wheel 516.

The driving principle of the box conveying apparatus is as follows. The motor 522 drives the driving spline shaft 51 to rotate. The right main chain wheel 53 is arranged on the driving spline shaft 51 through the right spline sleeve, and the left main chain wheel 56 is connected on the driving spline shaft 51 through the left round sleeve, so that the right main chain wheel 53 and the left main chain wheel 56 rotate synchronously. Since the outer driving pulley 59 is connected on the driving spline shaft 51, the outer driving pulley 59 also rotates synchronously, and the outer driving pulley 59 drives the outer driven pulley 514 to rotate by the outer conveying belt 519. Since the outer driven pulley 514 is connected on the driven spline shaft 511, the driven spline shaft 511 rotates synchronously. Since the right end of the driven spline shaft 511 is connected to the right driven pulley 512, the right driven pulley 512 rotates synchronously, and the right driven pulley 512 drives the right driving pulley 55 to rotate by the right conveying belt 517. The right driving pulley 55 and the right auxiliary chain wheel 54 are connected on the right rotating sleeve, while the right rotating sleeve is rotatably sleeved on the right spline sleeve, so that the right driving pulley 55 and the right auxiliary chain rotate synchronously. Since the left end of the driven spline shaft 511 is connected to the left driven pulley 513, the left driven pulley 513 rotates synchronously, and the left driven pulley 513 drives the left driving pulley 58 to rotate by the left conveying belt 518. The left driving pulley 58 and the left auxiliary chain wheel are connected on the left rotating sleeve, while the left rotating sleeve is rotatably sleeved on the left round sleeve, so that the left driving pulley 58 and the left auxiliary chain wheel 57 rotate synchronously. With the above driving structure, an output of the motor 522 can synchronously drive the right main chain wheel 53, the right auxiliary chain wheel 54, the left main chain wheel 56 and the left auxiliary chain wheel 57 to rotate synchronously.

The adjustment principle of the box conveying apparatus suitable for different specifications of box length is as follows. The motor 522 stops outputting, and since the right main chain wheel 53, the right auxiliary chain wheel 54, and the right driving pulley 55 can move axially on the driving spline shaft 51, and the right driven pulley 512 can move axially on the driven spline shaft 511, as long as the right main chain wheel 53, the right auxiliary chain wheel 54, the right driving pulley 55, and the right driven pulley 512 are moved axially, the distance between supporting members 52 at both left and right sides can be adjusted.

The adjustment principle of the box conveying apparatus suitable for different specifications of box width is as follows. During adjustment, the motor 522 stops outputting, the driving spline shaft 51, the right main chain wheel 53 and the left main chain wheel 56 do not move, while the slide base 521 is moved to enable the upper traveling wheel 515 and the lower traveling wheel 516 to move up and down together. Since the outer driving pulley 59 is fixed, the outer driven pulley 514 rotates, and the right driven pulley 512 and the left driven pulley 513 rotate synchronously to further drive the right driving pulley 55 and the left driving pulley 58 to rotate synchronously, so that the right auxiliary chain wheel 54 and the left auxiliary chain wheel 57 have an angular velocity change relative to the right main chain wheel 53 and the left main chain wheel 56, thereby realizing the adjustment suitable for different specifications of box width.

In order to enable the outer conveying belt 519 to be more tightly and comprehensively attached to the outside of the outer driving pulley 59, the outer driven pulley 514, the upper traveling wheel 515 and the lower traveling wheel 516, according to the present invention, the auxiliary wheels 520 are arranged between the upper traveling wheel 515 and the outer driving pulley 59, between the upper traveling wheel 515 and the outer driven pulley 514, between the lower traveling wheel 516 and the outer driving pulley 59, and between the lower traveling wheel 516 and the outer driven pulley 514, respectively. The outside of each of the four auxiliary wheels 520 is pressed on the outer conveying belt 519.

The slide base 521 can be moved up and down by manual adjustment or can be driven and adjusted by the motor 522. In order to make the adjustment more convenient, according to the present invention, the adjustment motor 522 is arranged on the machine base. The adjustment motor 522 is drivingly connected to a screw rod, and the screw rod is threaded with the slide base 521. The adjustment motor 522 drives the screw rod to rotate, and the screw rod drives the slide base 521 to move up and down, as so to further drive the upper traveling wheel 515 and the lower traveling wheel 516 to move up and down.

## Claims

1. A high-speed blister boxing machine, comprising: a material grid conveying apparatus (3), a folded box material warehouse (1), a box suction and transfer apparatus (2), a box conveying apparatus (5), and a material pushing apparatus (4), wherein the material grid conveying apparatus (3) and the box conveying apparatus (5) are arranged side by side; the material pushing apparatus (4) is located on a side of the material grid conveying apparatus (3); the box suction and transfer apparatus (2) and the folded box material warehouse (1) are both located above the box conveying apparatus (5); the material pushing apparatus (4) comprises a chain (41), a chain wheel, an annular push plate guide rail (44), and a plurality of material pushing units (42); the material pushing unit (42) comprises a material pushing base (420), a push plate assembly (421), and a push paper assembly (422); the material pushing base (420) is connected to the chain (41), and the chain (41) is wound on the chain wheel, **and characterized in that** an annular guide rail (43) is arranged at each of both sides of the annular push plate guide rail (44); a movable sliding base (423) is arranged at each of both ends of the material pushing base (420), and the movable sliding base (423) is arranged on the annular guide rail (43) with a sliding fit;
wherein the annular guide rail (43) is in a shape of bar; the movable sliding base (423) comprises an upper roller (4230) and a lower roller (4231), and the lower roller (4231) and the upper roller (4230) are engaged with an inner side and an outer side of the annular guide rail (43), respectively; and the movable sliding base (423) at one end of the material pushing base further comprises a left roller and a right roller (4232), and the left roller and the right roller (4232) are engaged with a left side and a right side of the annular guide rail (43)
wherein two annular guide rails (43) are arranged side by side at left and right, surfaces of turning transition sections (430) of the two annular guide rails (43) have a height difference; there are two upper rollers (4230), which together with the lower roller (4231) form a triangle when viewed from the side,
and the two upper rollers (4230) are arranged back and forth for enabling the movable sliding base (423) to be engaged with the annular guide rails (43) in a triangular form such that the movable sliding base (423) can turn more smoothly in an arc section of the annular guide rails (43); the two upper rollers (4230), on left and right sides, correspondingly act on the two annular guide rails (43), respectively.

2. The high-speed blister boxing machine according to claim 1, **characterized in that**, the material pushing base (420) is connected to the chain (41) through an adaptive member (411); one end of the adaptive member (411) is hinged with a shaft pin (410) of the chain (41), and the other end of the adaptive member (411) is hinged with the material pushing base (420).

3. The high-speed blister boxing machine according to claim 1, **characterized in that**, the push plate assembly (421) comprises a push plate head (4210), a push plate roller (4212) and a push plate slide block (4211); the push plate roller (4212) is located in the annular push plate guide rail (44); a positioning guide rail (428) is arranged on the material pushing base (420), and the push plate slide block (4211) is slidably arranged on the positioning guide rail (428).

4. The high-speed blister boxing machine according to claim 1, **characterized in that**, a guide groove frame (45) is arranged on a periphery of the annular push plate guide rail (44), and an annular push paper guide groove (452) and an annular lifting guide groove (453) are arranged on the guide groove frame (45); the guide groove frame (45) is formed by splicing an upper guide groove frame (450) and a lower guide groove frame (451), and the upper guide groove frame (450) is lifted and adjustably mounted on the lower guide groove frame (451); an annular push paper guide groove upper segment (4521) and an annular lifting guide groove upper segment (4531) are arranged on the upper guide groove frame (450), and an annular push paper guide groove lower segment (4522) and an annular lifting guide groove lower segment (4532) are arranged on the lower guide groove frame (451); the annular push paper guide groove upper segment (4521) and the annular push paper guide groove lower segment (4522) are engaged by extending, and the annular lifting guide groove upper segment (4531) and the annular lifting guide groove lower segment (4532) are engaged by extending; a lifting guide rail (424) is mounted on the material pushing base (420), and a positioning slide block (425) is slidably arranged on the lifting guide rail (424); a lifting roller (426) and a positioning guide groove (427) are mounted on the positioning slide block (425), and the lifting roller (426) is arranged in the annular lifting guide groove (453); the push paper assembly (422) comprises a push paper guide rod (4221), a push paper plate (4220) and a push paper roller (4222), wherein the push paper plate (4220) and the push paper roller (4222) are connected on the push paper guide rod (4221); the push paper guide rod (4221) is arranged in the positioning guide groove (427), and the push paper roller (4222) is arranged in the annular push paper guide groove (52).

5. The high-speed blister boxing machine according to claim 4, **characterized in that**, an end portion of the annular push paper guide groove upper segment (4521) is provided with a vertical guide groove extending portion (454), an end portion of the annular push paper guide groove lower segment (4522) is provided with a vertical engaging adjustment groove (455), and the guide groove extending portion (454) is lifted and arranged in the engaging adjustment groove (455); an end portion of the annular lifting guide groove upper segment (4531) is provided with a vertical upper guide groove side wall (4533), an end portion of the annular lifting guide groove lower segment (4532) is provided with a vertical lower guide groove side wall (4534), and the lower guide groove side wall (4534) is, from left to right, fully engaged with the upper guide groove side wall (4533).

6. The high-speed blister boxing machine according to claim 1, **characterized in that**, the box suction and transfer apparatus (2) comprises a mounting base (21), a power source (22), a main shaft (219), a revolution table (24), a center-fixed gear (23), and a plurality of suction nozzle rod assemblies (26); the suction nozzle rod assembly (26) comprises a suction nozzle (260) and a suction rod (261), and the suction rod (261) of each suction nozzle rod assembly (26) is eccentrically mounted on one rotary table (218); the rotary table (218) is rotatably mounted on the revolution table (24) through a rotary shaft, and a planetary gear (28) is mounted on the rotary shaft; a transition gear (27) is rotatably mounted on the revolution table (24); the planetary gear (28) is engaged with the transition gear (27), and the transition gear (27) is engaged with the center-fixed gear (23).

7. The high-speed blister boxing machine according to claim 1, **characterized in that**, the box conveying apparatus (5) comprises a machine base, supporting members (52), a left main chain, a right main chain, and a driving spline shaft (51); the left main chain is wound on a left main chain wheel (56), and the right main chain is wound on a right main chain wheel (53); the right main chain wheel (53) is arranged on the driving spline shaft (51) through a right spline sleeve, and a right rotating sleeve is rotatably sleeved outside the right spline sleeve; the right rotating sleeve is connected to a right driving pulley (55) and a right auxiliary chain wheel (54), and the right auxiliary chain wheel (54) is located between the right main chain wheel (53) and the right driving pulley (55); a right auxiliary chain is wound on the right auxiliary chain wheel (54), and the right auxiliary chain is connected to a supporting member (52); the left main chain wheel (56) is connected on the driving spline shaft (51) through a left round sleeve, and a left rotating sleeve is rotatably sleeved on the left round sleeve; the left rotating sleeve is connected to a left driving pulley (58) and a left auxiliary chain wheel (57), and the left auxiliary chain wheel (57) is located between the left main chain wheel (56) and the left driving pulley (58); a left auxiliary chain is wound on the left auxiliary chain wheel (57), and the left auxiliary chain is connected to a supporting member (52); a driven spline shaft (511) is mounted on a side of the driving spline shaft (51); a right driven pulley (512) with a spline hole is sleeved on a right end of the driven spline shaft (511), and a right conveying belt (517) is wound on the right driven pulley (512) and the right driving pulley (55); a left end of the driven spline shaft (511) is connected to a left driven pulley (513) and an outer driven pulley (514), and a left conveying belt (518) is wound on the left driven pulley (513) and the left driving pulley (58); a slide base (521) is mounted on the machine base and is adjusted to move up and down; an upper traveling wheel (515) and a lower traveling wheel (516) are mounted on the slide base (521); the driving spline shaft (51) is connected to an outer driving pulley (59), and an outer conveying belt (519) is wound outside the outer driving pulley (59), the outer driven pulley (514), the upper traveling wheel (515) and the lower traveling wheel (516) .

8. The high-speed blister boxing machine according to claim 7, **characterized in that**, auxiliary wheels (520) are arranged between the upper traveling wheel (515) and the outer driving pulley (59), between the upper traveling wheel (515) and the outer driven pulley (514), between the lower traveling wheel (516) and the outer driving pulley (59), and between the lower traveling wheel (516) and the outer driven pulley (514), respectively; and an outside of each of the four auxiliary wheels (520) is pressed on the outer conveying belt (519).

## Patentansprüche

1. Hochgeschwindigkeitsblisterverpackungsmaschine, umfassend: ein Materialgitterbeförderungseinrichtung (3), ein Faltverpackungsmateriallager (1), eine Verpackungsansaug- und -übertragungseinrichtung (2), eine Verpackungsbeförderungseinrichtung (5) und eine Materialschiebeeinrichtung (4), wobei die Materialgitterbeförderungseinrichtung (3) und die Verpackungsbeförderungseinrichtung (5) Seite an Seite angeordnet sind; die Materialschiebeeinrichtung (4) auf einer Seite der Materialgitterbeförderungseinrichtung (3) angeordnet ist; die Verpackungsansaug- und -übertragungseinrichtung (2) und die Faltverpackungsmateriallager (1) beide oberhalb der Verpackungsbeförderungseinrichtung (5) angeordnet sind; die Materialschiebeeinrichtung (4) eine Kette (41), ein Kettenrad, eine ringförmige Schubplattenführungsschiene (44) und eine Vielzahl von Materialschiebeeinheiten (42) umfasst; die Materialschiebeeinheit (42) einen Materialschiebekörper (420), eine Schubplattenbaugruppe (421) und eine Papierschiebebaugruppe (422) umfasst; der Materialschiebekörper (420) mit der Kette (41) verbunden ist und die Kette (41) um das Kettenrad gewunden ist und
**dadurch gekennzeichnet, dass** eine ringförmige Führungsschiene (43) auf beiden Seiten der ringförmigen Schubplattenführungsschiene (44) angeordnet ist; ein bewegbarer Gleitkörper (423) an jedem der beiden Enden des Materialschiebekörpers (420) angeordnet ist und der bewegbare Gleitkörper (423) in Gleitpassung an der ringförmigen Führungsschiene (43) angeordnet ist; die ringförmige Führungsschiene (43) die Form einer Leiste aufweist; der bewegbare Gleitkörper (423) eine obere Rolle (4230) und eine untere Rolle (4231) umfasst und die untere Rolle (4231) und die obere Rolle (4230) jeweils mit einer Innenseite und einer Außenseite der ringförmigen Führungsschiene (43) in Eingriff stehen; und der bewegbare Gleitkörper (423) an einem Ende des Materialschiebekörpers ferner eine linke Rolle und eine rechte Rolle (4232) umfasst und die linke Rolle und die rechte Rolle (4232) jeweils mit einer linken Seite und einer rechten Seite der ringförmigen Führungsschiene (43) in Eingriff stehen, wobei zwei ringförmige Führungsschienen (43) links und rechts Seite an Seite angeordnet sind, wobei Flächen von Wendeübergangsabschnitten (430) der zwei ringförmigen Führungsschienen (43) eine Höhendifferenz aufweisen; wobei zwei obere Rollen (4230) vorliegen, die von der Seite betrachtet zusammen mit der unteren Rolle (4231) ein Dreieck bilden, und die zwei oberen Rollen (4230) hin und her beweglich angeordnet sind, damit der bewegbare Gleitkörper (423) mit den ringförmigen Führungsschienen (43) in Dreiecksform in Eingriff treten kann, derart, dass der bewegbare Gleitkörper (423) in einem Bogenbereich der ringförmigen Führungsschienen (43) eine ungehinderte Wendung vollziehen kann; wobei die zwei oberen Rollen (4230) auf der linken und rechten Seite jeweils entsprechend auf die zwei ringförmige Führungsschienen (43) einwirken.

2. Hochgeschwindigkeitsblisterverpackungsmaschine nach Anspruch 1, **dadurch gekennzeichnet, dass** der Materialschiebekörper (420) mit der Kette (41) durch ein Anpassungselement (411) verbunden ist; wobei ein Ende des Anpassungselement (411) an einem Zapfen (410) der Kette (41) drehbar angebracht ist und das andere Ende des Anpassungselements (411) am Materialschiebekörper (420) drehbar angebracht ist.

3. Hochgeschwindigkeitsblisterverpackungsmaschine nach Anspruch 1, **dadurch gekennzeichnet, dass** die Schiebeplattenbaugruppe (421) einen Schiebeplattenkopf (4210), eine Schiebeplattenrolle (4212) und einen Schiebeplattengleitblock (4211) umfasst; wobei die Schiebeplattenrolle (4212) in der ringförmigen Schiebeplattenführungsschiene (44) angeordnet ist; eine Positionierungsführungsschiene (428) am Materialschiebekörper (420) angeordnet ist und der Schiebeplattengleitblock (4211) gleitfähig an der Positionierungsführungsschiene (428) angeordnet ist.

4. Hochgeschwindigkeitsblisterverpackungsmaschine nach Anspruch 1, **dadurch gekennzeichnet, dass** ein Führungsnutrahmen (45) an einem Umfang der ringförmigen Schubplattenführungsschiene (44) angeordnet ist und eine ringförmige Papierschiebeführungsnut (452) und eine ringförmige Hebeführungsnut (453) an dem Führungsnutrahmen (45) angeordnet sind; der Führungsnutrahmen (45) durch Aufteilen in einen oberen Führungsnutrahmen (450) und einen unteren Führungsnutrahmen (451) gebildet ist und der obere Führungsnutrahmen (450) angehoben und verstellbar am unteren Führungsnutrahmen (451) montiert ist; ein oberes Segment der ringförmigen Schiebepapierführungsnut (4521) und ein oberes Segment der ringförmigen Hebeführungsnut (4531) am oberen Führungsnutrahmen (450) angeordnet sind und ein unteres Segment der ringförmigen Schiebepapierführungsnut (4522) und ein unteres Segment der ringförmigen Hebeführungsnut (4532) am unteren Führungsnutrahmen (451) angeordnet sind; das obere Segment der ringförmigen Schiebepapierführungsnut (4521) und das untere Segment der ringförmigen Schiebepapierführungsnut (4522) durch Erweitern in Eingriff treten und das obere Segment der ringförmigen Hebeführungsnut (4531) und das untere Segment der ringförmigen Hebeführungsnut (4532) durch Erweitern in Eingriff treten; eine Hebeführungsschiene (424) am Materialschiebekörper (420) montiert ist und ein Positionierungsgleitblock (425) gleitfähig an der Hebeführungsschiene (424) angeordnet ist; eine Heberolle (426) und eine Positionierungsführungsnut (427) an dem Positionierungsgleitblock (425) montiert sind und die Heberolle (426) in der ringförmigen Hebeführungsnut (453) angeordnet ist; die Papierschiebebaugruppe (422) eine Papierschiebeführungsstange (4221), eine Papierschubplatte (4220) und eine Papierschieberolle (4222) umfasst, wobei die Papierschubplatte (4220) und die Papierschieberolle (4222) an der Papierschiebeführungsstange (4221) verbunden sind; die Papierschiebeführungsstange (4221) in der Positionierungsführungsnut (427) angeordnet ist und die Papierschieberolle (4222) in der ringförmigen Papierschiebeführungsnut (52) angeordnet ist.

5. Hochgeschwindigkeitsblisterverpackungsmaschine nach Anspruch 4, **dadurch gekennzeichnet, dass** ein Endabschnitt des oberen Segments der ringförmigen Papierschiebeführungsnut (4521) mit einem vertikalen Führungsnuterweiterungsabschnitt (454) versehen ist, ein Endabschnitt des unteren Segments der ringförmigen Papierschiebeführungsnut (4522) mit einer vertikalen Eingriffsanpassungsnut (455) versehen ist und der Führungsnuterweiterungsabschnitt angehoben und in der Eingriffsanpassungsnut (455) angeordnet ist; ein Endabschnitt des oberen Segments der ringförmigen Hebeführungsnut (4531) mit einer vertikalen oberen Führungsnutseitenwand (4533) versehen ist, ein Endabschnitt des unteren Segments der ringförmigen Hebeführungsnut (4532) mit einer vertikalen unteren Führungsnutseitenwand (4534) versehen ist und die untere Führungsnutseitenwand (4534) von links nach rechts vollständig mit der oberen Führungsnutseitenwand (4533) in Eingriff steht.

6. Hochgeschwindigkeitsblisterverpackungsmaschine nach Anspruch 1, **dadurch gekennzeichnet, dass** die Verpackungsansaug- und -übertragungseinrichtung (2) eine Montagebasis (21), eine Leistungsquelle (22), eine Hauptwelle (219), einen Drehtisch (24), einen mittig fixiertes Zahnrad (23) und eine Vielzahl von Saugdüsenstangenbaugruppen (26) umfasst; wobei die Saugdüsenstangenbaugruppe (26) eine Saugdüse (260) und eine Saugstange (261) umfasst und die Saugstange (261) jeder Saugdüsenstangenbaugruppe (26) exzentrisch an einem Rotationstisch (218) montiert ist; der Rotationstisch (218) durch eine Drehwelle drehbar am Drehtisch (24) montiert ist und ein Planetenrad (28) an der Drehwelle montiert ist; ein Übergangszahnrad (27) drehbar am Drehtisch (24) montiert ist; das Planetenrad (28) mit dem Übergangszahnrad (27) in Eingriff steht und das Übergangszahnrad (27) mit dem mittig fixierten Zahnrad (23) in Eingriff steht.

7. Hochgeschwindigkeitsblisterverpackungsmaschine nach Anspruch 1, **dadurch gekennzeichnet, dass** die Verpackungsbeförderungseinrichtung (5) eine Maschinenbasis, Trägerelemente (52), eine linke Hauptkette, eine rechte Hauptkette und eine antreibende Keilwelle (51) umfasst; wobei die linke Hauptkette um ein linkes Hauptkettenrad (56) gewunden ist und die rechte Hauptkette um ein rechtes Hauptkettenrad (53) gewunden ist; das rechte Hauptkettenrad (53) an der antreibenden Keilwelle (51) durch eine rechte Keilbuchse angeordnet ist und eine rechte Drehbuchse von außen drehbar auf die rechte Keilbuchse aufgesetzt ist; die rechte Drehbuchse mit einer rechten antreibende Scheibe (55) und einem rechten Hilfskettenrad (54) verbunden ist und das rechte Hilfskettenrad (54) zwischen dem rechten Hauptkettenrad (53) und der rechten antreibenden Scheibe (55) angeordnet ist; eine rechte Hilfskette um das rechte Hilfskettenrad (54) gewunden ist und die rechte Hilfskette mit einem Trägerelement (52) verbunden ist; das linke Hauptkettenrad (56) mit der antreibenden Keilwelle (51) durch eine linke Rundbuchse verbunden ist und eine linke Drehbuchse drehbar auf die linke Rundbuchse gesetzt ist; die linke Drehbuchse mit einer linken antreibenden Scheibe (58) und einem linken Hilfskettenrad (57) verbunden ist und das linke Hilfskettenrad (57) zwischen dem linken Hauptkettenrad (56) und der linken antreibenden Scheibe (58) angeordnet ist; eine linke Hilfskette um das linke Hilfskettenrad (57) gewunden ist und das linke Hilfskette mit einem Trägerelement (52) verbunden ist; eine angetriebene Keilwelle (511) auf einer Seite der antreibenden Keilwelle (51) montiert ist; eine rechte angetriebene Scheibe (512) mit einem Keilloch auf ein rechtes Ende der angetriebenen Keilwelle (511) gesetzt ist und ein rechtes Förderband (517) um die rechte angetriebene Scheibe (512) und die rechte antreibende Scheibe (55) gewunden ist; ein linkes Ende der angetriebenen Keilwelle (511) mit einer linken angetriebenen Scheibe (513) und einer äußeren angetriebenen Scheibe (514) verbunden ist und ein linkes Förderband (518) um die linke angetriebene Scheibe (513) und die linke antreibende Scheibe (58) gewunden ist; ein Gleitkörper (521) an der Maschinenbasis montiert und zur Auf- und Abbewegung eingestellt ist; ein oberes Laufrad (515) und ein unteres Laufrad (516) am Gleitkörper (521) montiert sind; die antreibende Keilwelle (51) mit einer äußeren antreibenden Scheibe (59) verbunden ist und ein äußeres Förderband (519) von außen um die äußere antreibende Scheibe (59), die äußere angetriebene Scheibe (514), das obere Laufrad (515) und das untere Laufrad (516) gewunden ist.

8. Hochgeschwindigkeitsblisterverpackungsmaschine nach Anspruch 7, **dadurch gekennzeichnet, dass** Hilfsräder (520) zwischen dem oberen Laufrad (515) und der äußeren antreibenden Scheibe (59), zwischen dem oberen Laufrad (515) und der äußeren angetriebenen Scheibe (514), zwischen dem unteren Laufrad (516) und der äußeren antreibenden Scheibe (59) und zwischen dem unteren Laufrad (516) und der äußeren angetriebenen Scheibe (514) angeordnet sind; und die Außenseite dieser vier Hilfsräder (520) gegen das äußere Förderband (519) gedrückt ist.

## Revendications

1. Une machine de mise en boîte haute vitesse à blisters, comprenant : un dispositif de convoyage de matériaux à treillis (3), un magasin de matériaux de boîtes pliées (1), un dispositif d'aspiration et de transfert de boîte (2), un dispositif de convoyage de boîtes (5), et un dispositif de poussée de matériaux (4), dans lequel le dispositif de convoyage de matériaux à treillis (3) et le dispositif de convoyage de boîtes (5) sont agencés côte à côte ; le dispositif de poussée de matériaux (4) est situé sur un côté du dispositif de convoyage de matériaux à treillis (3) ; le dispositif d'aspiration et de transfert de boîte (2) et le magasin de matériaux de boîtes pliées (1) étant tous deux situés au-dessus du dispositif de convoyage de boîtes (5) ; le dispositif de poussée de matériaux (4) comprend une chaîne (41), une roue à chaîne, un rail de guidage à plaque de poussée annulaire (44), et une pluralité d'unités de poussée de matériaux (42) ; l'unité de poussée de matériaux (42) comprenant une base de poussée de matériaux (420), un ensemble de plaque de poussée (421), et un ensemble de poussée de papier (422) ; la base de poussée de matériaux (420) étant connectée à la chaîne (41), et la chaîne (41) étant enroulée sur la roue à chaîne, et **caractérisé en ce qu'**un rail de guidage annulaire (43) est agencé sur chacun des côtés du rail de guidage à plaque de poussée annulaire (44) ; une base coulissante mobile (423) est agencée sur chacune des extrémités de la base de poussée de matériaux (420), et la base coulissante mobile (423) est agencée sur le rail de guidage annulaire (43) avec un ajustement coulissant ;
dans lequel le rail de guidage annulaire (43) est en forme de barre ; la base coulissante mobile (423) comprend un rouleau supérieur (4230) et un rouleau inférieur (4231), et le rouleau inférieur (4231) et le rouleau supérieur (4230) sont engagés avec le côté interne et le côté externe du rail de guidage annulaire (43) respectivement ; et la base coulissante mobile (423) à une extrémité de la base de poussée de matériaux comprend en outre un rouleau gauche et un rouleau droit (4232), et le rouleau gauche et le rouleau droit (4232) sont engagés avec le côté gauche et le côté droit du rail de guidage annulaire (43) dans lequel deux rails de guidage annulaires (43) sont agencés côté à côté à gauche et à droite, les surfaces des sections de transition de virage (430) des deux rails de guidage annulaires (43) sont de hauteurs différentes ; il y a deux rouleaux supérieurs (4230) qui, avec le rouleau inférieur (4231), forment un triangle lorsqu'observés depuis le côté, et les deux rouleaux supérieurs (4230) sont agencés en va-et-vient afin de permettre à la base coulissante mobile (423) de s'engager avec les rails de guidage annulaires (43) en une forme triangulaire de sorte que la base coulissante mobile (423) peut tourner de façon plus fluide en une section d'arc des rails de guidage annulaire (43) ; les deux rouleaux supérieurs (4230), sur les côté gauche et droit agissent de façon correspondante sur les deux rails de guidage annulaires (43), respectivement.

2. Une machine de mise en boîte haute vitesse à blisters selon la revendication 1, **caractérisée en ce que** la base de poussée de matériaux (420) est connectée à la chaîne (41) via un élément adaptateur (411) ; une extrémité de l'élément adaptateur (411) est articulée sur une cheville de tige (410) de la chaîne (41), et l'autre extrémité de l'élément adaptateur (411) est articulée sur la base de poussée de matériaux (420).

3. Une machine de mise en boîte haute vitesse à blisters selon la revendication 1, **caractérisée en ce que** l'ensemble de plaque de poussée (421) comprend une tête de plaque de poussée (4210), un rouleau de plaque de poussée (4212) et un bloc coulissant de plaque de poussée (4211) ; le rouleau de plaque de poussée (4212) étant situé dans le rail de guidage à plaque de poussée annulaire (44) ; un rail de guidage de positionnement (428) est agencé sur la base de poussée de matériaux (420), et le bloc coulissant de plaque de poussée (4211) est agencé sur le rail de guidage de positionnement (428).

4. Une machine de mise en boîte haute vitesse à blisters selon la revendication 1, **caractérisée en ce qu'**un cadre à gorge de guidage (45) est agencé sur la périphérie du rail de guidage à plaque de poussée annulaire (44), une gorge de guidage annulaire de poussée de papier (452) et une gorge de guidage annulaire de levage (453) sont agencées sur le cadre à gorge de guidage (45) ; le cadre à gorge de guidage (45) est formé par division en un cadre à gorge de guidage supérieur (450) et un cadre à gorge de guidage inférieur (451), et le cadre à gorge de guidage supérieur (450) est levé et monté de façon ajustable sur le cadre à gorge de guidage inférieur (451) ; un segment supérieur de la gorge de guidage annulaire de poussée de papier (4521) et un segment supérieur de la gorge de guidage annulaire de levage (4531) sont agencés sur le cadre à gorge de guidage supérieur (450), et un segment inférieur de la gorge de guidage annulaire de poussée de papier (4522) et un segment inférieur de la gorge de guidage annulaire de levage (4532) sont agencés sur le cadre à gorge de guidage inférieur (451) ; le segment supérieur de la gorge de guidage annulaire de poussée de papier (4521) et le segment inférieur de la gorge de guidage annulaire de poussée de papier (4522) sont engagés par prolongement, et le segment supérieur de la gorge de guidage annulaire de levage (4531) et le segment inférieur de la gorge de guidage annulaire de levage (4532) sont engagés par prolongement ; un rail de guidage de levage (424) est monté sur la base de poussée de matériaux (420), et un bloc coulissant de positionnement (425) est agencé de façon coulissante sur le rail de guidage de levage (424) ; un rouleau de levage (426) et une gorge de guidage de positionnement (427) sont montés sur le bloc coulissant de positionnement (425), et le rouleau de levage (426) est agencé dans la gorge de guidage annulaire de levage (453) ; l'ensemble de poussée de papier (422) comprend une tige de guidage de poussée de papier (4221), une plaque de poussée de papier (4220) et un rouleau de poussée de papier (4222), dans lequel la plaque de poussée de papier (4220) et le rouleau de poussée de papier (4222) sont connectés sur la tige de guidage de poussée de papier (4221) ; la tige de guidage de poussée de papier (4221) est agencée dans la gorge de guidage de positionnement (427), et le rouleau de poussée de papier (4222) est agencé dans la gorge annulaire de guidage de poussée de papier (52).

5. Une machine de mise en boîte haute vitesse à blisters selon la revendication 4, **caractérisée en ce que** une portion d'extrémité du segment supérieur de la gorge de guidage annulaire de poussée de papier (4521) est munie d'une portion de prolongement à gorge de guidage verticale (454), une portion d'extrémité du segment inférieur de la gorge de guidage annulaire de poussée de papier (4522) est munie d'une gorge d'ajustement à engagement vertical (455), et la portion de prolongement à gorge de guidage verticale (454) est levée et agencée dans la gorge d'ajustement à engagement vertical (455); une portion d'extrémité du segment supérieur de la gorge de guidage annulaire de levage (4531) est munie d'une paroi latérale à gorge de guidage verticale supérieure (4533), une portion d'extrémité du segment inférieur de la gorge de guidage annulaire de levage (4532) est munie d'une paroi latérale à gorge de guidage verticale inférieure (4534), et la paroi latérale à gorge de guidage verticale inférieure (4534) est, de gauche à droite, entièrement engagée avec la paroi latérale à gorge de guidage verticale supérieure (4533).

6. Une machine de mise en boîte haute vitesse à blisters selon la revendication 1, **caractérisée en ce que** le dispositif d'aspiration et de transfert de boîte (2) comprend une base de montage (21), une source d'alimentation électrique (22), un arbre principal (219), un plateau à révolution (24), un engrenage fixé au centre (23), et une pluralité d'ensembles de tige de buse d'aspiration (26) ; l'ensemble de tige de buse d'aspiration (26) comprend une buse d'aspiration (260) et une tige de buse d'aspiration (261), et la tige de buse d'aspiration (261) de chaque ensemble de tige de buse d'aspiration (26) est montée de façon excentrée sur le plateau rotatif (218) ; le plateau rotatif (218) est monté de façon rotative sur le plateau à révolution (24) via un arbre rotatif, et un engrenage planétaire (28) est monté sur l'arbre rotatif ; un engrenage de transition (27) est monté de façon rotative sur le plateau à révolution (24) ; l'engrenage planétaire (28) est engagé avec l'engrenage de transition (27), et l'engrenage de transition (27) est engagé avec l'engrenage fixé au centre (23).

7. Une machine de mise en boîte haute vitesse à blisters selon la revendication 1, **caractérisée en ce que** le dispositif de convoyage de boîtes (5) comprend une base de machine, des éléments de soutien (52), une chaîne principale gauche, une chaîne principale droite, et un arbre moteur cannelé (51) ; la chaîne principale gauche est enroulée sur une roue de chaîne principale gauche (56), et la chaîne principale droite est enroulée sur une roue de chaîne principale droite (53) ; la roue de chaîne principale droite (53) est agencée sur l'arbre moteur cannelé (51) via un manchon cannelé droit, et un manchon rotatif droit est emmanché de façon rotative à l'extérieur du manchon cannelé droit ; le manchon rotatif droit est connecté à une poulie motrice droite (55) et à une roue de chaîne auxiliaire droite (54), et la roue de chaîne auxiliaire droite (54) est située entre la roue de chaîne principale droite (53) et la poulie motrice droite (55) ; la chaîne auxiliaire droite est enroulée sur la roue de chaîne auxiliaire droite (54), et la chaîne auxiliaire droite est connectée à un élément de soutien (52) ; la roue de chaîne principale gauche (56) est connectée à l'arbre moteur cannelé (51) via un manchon rond gauche, et un manchon rotatif gauche est emmanché de façon rotative sur le manchon rond gauche ; le manchon rotatif gauche est connecté à une poulie motrice gauche (58) et à une roue de chaîne auxiliaire gauche (57), et la roue de chaîne auxiliaire gauche (57) est située entre la roue de chaîne principale gauche (56) et la poulie motrice gauche (58) ; une chaîne auxiliaire gauche est enroulée sur la roue de chaîne auxiliaire gauche (57), et la chaîne auxiliaire droite est connectée à un élément de soutien (52) ; un arbre cannelé entraîné (511) est monté sur un côté de l'arbre moteur cannelé (51) ; une poulie entraînée droite (512) avec un trou cannelé est emmanchée sur l'extrémité droite de l'arbre cannelé entraîné (511), et une courroie de convoyage droite (517) est enroulée sur la poulie entraînée droite (512) et la poulie motrice droite (55) ; l'extrémité gauche de l'arbre cannelé entraîné (511) est connectée à une poulie entraînée gauche (513) et à une poulie entraînée externe (514), et une courroie de convoyage gauche (518) est enroulée sur la poulie entraînée gauche (513) et sur la poulie motrice gauche (58) ; une base coulissante (521) est montée sur la base de machine et est ajustée pour se déplacer vers le haut et le bas ; une roue de déplacement supérieure (515) et une roue de déplacement inférieure (516) sont montées sur la base coulissante (521) ; l'arbre moteur cannelé (51) est connecté à une poulie motrice externe (59), et une courroie de convoyage externe (519) est enroulée à l'extérieur de la poulie motrice externe (59), la poulie entraînée externe (514), la roue de déplacement supérieure (515) et la roue de déplacement inférieure (516).

8. Une machine de mise en boîte haute vitesse à blisters selon la revendication 7, **caractérisée en ce que**, les roues auxiliaires (520) sont agencées entre la roue de déplacement supérieure (515) et la poulie motrice externe (59), entre la roue de déplacement supérieure (515) et la poulie entraînée externe (514), entre la roue de déplacement inférieure (516) et la poulie motrice externe (59), et entre la roue de déplacement inférieure (516) et la poulie entraînée externe (514) respectivement; et l'extérieur de chacune des quatre roues auxiliaires (520) est appuyé contre la courroie de convoyage externe (519).
